Europäisches Patentamt

European Patent Office

Office européen des brevets

(11) Publication number: **0 413 830 A1**

# EUROPEAN PATENT APPLICATION
## published in accordance with Art. 158(3) EPC

(21) Application number: 90903950.5

(22) Date of filing: 06.03.90

(86) International application number:
PCT/JP90/00284

(87) International publication number:
WO 90/10653 (20.09.90 90/22)

(51) Int. Cl.5: **C08F 6/02, C08F 6/10**

(30) Priority: 06.03.89 JP 51959/89

(43) Date of publication of application:
27.02.91 Bulletin 91/09

(84) Designated Contracting States:
BE DE ES FR GB IT NL

(71) Applicant: NIPPON STEEL CHEMICAL CO. LTD.
13-16 Ginza 5-chome Chuo-ku
Tokyo 104(JP)

(72) Inventor: SUGAWARA, Hitoshi 38-14,
Kiyomidaiminami 1-chome
Kisarazu-shi
Chiba-ken 292(JP)

Inventor: SAKAMI, Yoshitaka 1-C-4, Sannou
Garden House
220, Souri Kisarazu-shi
Chiba-ken 292(JP)
Inventor: KUSUNOSE, Masanori
1338-1, Yaehara Kimitsu-shi
Chiba-ken 299-11(JP)
Inventor: YASUTAKE, Kouji
1331-2, Minou Kimitsu-shi
Chiba-ken 299-11(JP)

(74) Representative: Strehl, Schübel-Hopf,
Groening
Maximilianstrasse 54 Postfach 22 14 55
D-8000 München 22(DE)

(54) METHOD OR REMOVING VOLATILE SUBSTANCES AND APPARATUS THEREFOR.

(57) In the method of removing volatile substance according to the present invention, volatile substances formed during the bulk polymerization or solution polymerization are heated in a heating zone divided into a plurality of parts and having a temperature gradient of rising from an inlet of the heating zone toward an outlet thereof to a temperature at which the volatile substances are not substantially gasified in the portion of the heating zone which is on the side of the inlet, and to a gasification temperature in the second to last portions of the heating zone, and the heated substances are subjected to flash distillation in a gas-liquid separating step to separate gas from liquid. According to this method, the heating conditions for a polymerizing liquid, the residence time thereof in the heating step and the timing of the flash distillation can be controlled easily, and the polymerizing liquid as a whole can be heated uniformly and efficiently. Moreover, the temperature of the polymerizing liquid does not become locally higher than required level. The polymerization of a monomer in the polymerizing liquid can be suppressed, and the formation of a polymer of low molecular weight can be minimized. The apparatus for removing volatile substance according to the present invention has a heating zone (5) formed with a multi-tubular heat exchanger (1) having a polymerizing liquid passage and a heating medium passage. The heating medium passage of this heat exchanger (1) is divided into a plurality of heating chamber (5a,5b). This apparatus is suitable for practicing the above-described method according to the present invention.

## PROCESS FOR REMOVING VOLATILE SUBSTANCES AND APPARATUS THEREFOR

Field of Technology

This invention relates to a process for separating and removing volatile substances from a polymer solution containing volatile substances produced in a polymerization step and an apparatus therefor and, more particularly though not limited, to a process useful for separating and removing volatile substances from a polymer solution containing styrene polymers and volatile substances and an apparatus therefor.

Background Technology

Thermoplastic polymers, for example, styrene polymers such as polystyrene, rubber-reinforced polystyrene, and acrylonitrile-styrene copolymers and polyolefins prepared from olefins having 2 to 8 carbon atoms such as polypropylene, are manufactured by bulk polymerization or by solution or suspension polymerization in the presence of a solvent or water as diluent (hereinafter simply referred to as solution polymerization). In the course of polymerization, particularly in bulk polymerization, the polymer solution becomes difficult to handle as its viscosity increases beyond a certain value with advancing polymerization of the monomer. In continuous production of thermoplastic polymers by such a process, therefore, the polymerization reaction is terminated before the viscosity of the solution becomes excessively high or a controlled amount of a diluent (solvent) is added to the polymerization system and a polymer solution containing volatile substances such as monomer and diluent is stripped of such volatile substances or devolatilized.

As for devolatilization, U.S. Patent No. 3,201, 365 discloses a process which places a polymer solution containing volatile substances under reduced pressure and lets the volatile substances to vaporize for separation and removal. In this process, however, the volatile substances consume heat while vaporizing and the polymer solution containing them drops in temperature after the devolatilization and an excessive drop of the temperature may sometimes cause the polymer solution to become too viscous for easy handling. For this reason, the invention described in the aforsaid U.S. Patent No. 3, 201, 365 prevents an excessive increase in viscosity and at the same time improves the efficiency of devolatilization by heating the polymer solution prior to its submission to reduced pressure.

This heating, however, induces part of the monomer remaining in the polymer solution to polymerize into oligomers and low-molecular-weight polymers (hereinafter simply referred to as low-molecular-weight polymers), which contaminate the devolatilized polymers and degrade the product quality. The problem has been particularly serious in the production of high-molecular-weight polystyrene.

A number of studies have been undertaken to solve the aforesaid problem.

For example, Japan Tokkyo Koho No. 48-29,797 (1973) proposes the following process: the polymer solution is caused to foam under reduced pressure prior to heating thereby the temperature of the polymer solution drops to lower the rate of polymerization of the unreacted monomer and prevent the formation of low-molecular-weight polymers during the travel of the solution to a heating step, then passed through the heating step with care exercised to obtain a uniform distribution of flow, and submitted to a vapor-liquid separation step under reduced pressure. On the other hand, Japan Tokkyo Koho No. 51-30,428 (1979) proposes a process for close control of operating conditions such as temperature and pressure at the inlet, state and rate of feeding, residence time, heat exchange efficiency, and temperature and pressure at the outlet for a heating step and temperature and degree of pressure reduction for the flash distillation in a vapor-liquid separation step under reduced pressure.

Knowledge acquired by the present inventors indicates, however, that the process of Japan Tokkyo Koho 48-29,797 (1973) presents difficulty in obtaining uniform foaming of the polymer solution prior to its introduction into the heating step, thus making it difficult to produce the anticipated effect stably, and the polymer solution, once foamed, resists uniform flow in the heating step, which makes it difficult to obtain a uniform distribution of flow here and rather facilitates the formation of low-molecular-weight polymers. With the process of Japan Tokkyo Koho No. 54-30,128 (1979), the difficulties involved in establishing the specified operating conditions destabilize the operation and make the formation of low-molecular-weight polymers practically impossible to prevent.

The present inventors have consequently undertaken extensive studies to solve the aforesaid problems, found that a polymer solution can be introduced into a heating step in a uniform flow with maximal suppression of the formation of low-molecular-weight polymers by dividing the heating step into a plurality of heating zones, heating the polymer solution to a relatively low temperature in the zone on the upstream inlet side, heating the solution stepwise in the following zones to a relatively high temperature in the zone on the downstream outlet side, and flashing the solution into a vapor-liquid separation vessel kept under reduced pressure, and completed this invention.

Accordingly, it is an object of this invention to provide a process for removing volatile substances in the recovery of polymers from a polymer solution containing volatile substances and an apparatus therefor, said process being capable of preventing the formation of low-molecular-weight polymers and minimizing the contamination by said low-molecular-weight polymers.

Another object of this invention is to provide a process for removing and separating volatile substances from a polymer solution by heating and flashing and an apparatus therefor, said process being capable of heating the polymer solution uniformly, establishing with ease the operational conditions such as heating condition and residence time, and minimizing the polymerization of the residual monomer in the polymer solution.

Disclosure of the Invention

This invention accordingly relates to a process for removing volatile substances from a thermoplastic polymer solution containing volatile substances resulting from bulk or solution polymerization by devolatilization consisting of a step for heating and the following step for reduced-pressure vapor-liquid separation wherein said heating step is divided into a plurality of heating zones extending from the inlet to the outlet of the polymer solution with a gradually increasing temperature gradient set up from the inlet toward the outlet, the aforesaid polymer solution is heated in the first zone on the inlet side at a temperature at which substantially none of said volatile substances vaporizes and then heated in any of the second zone and those following thereafter at a temperature at which said volatile substances vaporize, and the heated polymer solution is flashed in said vapor-liquid separation step following said heating step.

This invention further relates to an apparatus equipped with a heating section and the following reduced-pressure vapor-liquid separation section for practicing the aforesaid process for removing volatile substances by heating a polymer solution containing volatile substances resulting from bulk or solution polymerization in the aforesaid heating zones and flashing the polymer solution in the vapor-liquid separation zone, said apparatus being composed of a multitube heat exchanger equipped with a channel for the polymer solution and a channel for a heat transfer fluid with the channel for the heat transfer fluid divided into a plurality of heating compartments, each heating compartment having an inlet and an outlet for the heat transfer fluid and capable of providing the polymer solution flowing through its own channel with a temperature gradient gradually increasing from upstream to downstream.

A polymer solution to which the process and the apparatus of this invention are applicable may be any polymer solution coming from a polymerization step and containing volatile substances such as unreacted monomer and a solvent added as diluent during the polymerization and there is no specific limitation as long as such volatile substances can be removed by devolatilization consisting of heating and the subsequent reduced-pressure vapor-liquid separation. Examples are solutions of styrene polymers such as polystyrene, rubber-reinforced polystyrene, and acrylonitrile-styrene copolymers and polyolefins prepared from olefins having 2 to 8 carbon atoms such as polypropylene prepared by bulk or solution polymerization. The process and the apparatus of this invention are particularly useful for the preparation of styrene polymers as they can be produced advantageously by bulk or solution polymerization.

A more detailed explanation will be given on a polymer solution to be dealt with in the production of the aforesaid styrene polymers. The polymer solution in question is obtained by polymerizing a styrene-based monomer or a mixture thereof with other copolymerizable compounds, for example, aromatic vinyl compounds other than styrene, diene compounds, and acrylic compounds, and occasionally a mixture of a styrene-based monomer and rubber or a mixture of a styrene-based monomer, other monomers, and rubber by a bulk or solution process. Examples are polymer solutions from polymerization of one or more of styrene, alkylstyrenes such as methylstyrene, ethylstyrene, and isopropylstyrene, and halogenated styrenes such as chlorostyrene and bromostyrene, from copolymerization of such styrene-based monomer and one or more of acrylonitrile, methacrylonitrile, methyl methacrylate, and ethyl methacrylate, or from copolymerization of the foregoing monomers and rubber such as polybutadiene, styrene-butadiene rubber, and isoprene rubber. Any of the polymer solutions mentioned above contains styrene polymers and volatile substances which are composed of the unreacted monomers in bulk polymerization or the unreacted monomers, solvents, and the like in solution polymerization, and an adequate content of such volatile substances is 60% by weight or more.

The polymer solution generally becomes difficult to handle when the polymerization is carried out until the content of volatile substances falls below 10% by weight and a remedial procedure is to stop the polymerization at some point where the content of volatile substances is 10% by weight or more and devolatilize the polymer solution. On the other hand, the recovery of polymers by devolatilizing the polymer solution with a too low polymer content is not advantageous in respect to yield and energy efficiency. Normally, the polymerization is carried out until the content of volatile substances becomes 60% by weight or less and then the polymer solution is devolatilized. With the conventional processes, the devolatilization of polymer solutions containing 30% by weight or more of volatile substances markedly increases the formation of low-molecular-weigt polymers and is virtually impossible to practice on an industrial scale. Contrary to this, the process of this invention is applicable with good effect to the cases where the content of volatile substances is in excess of 30% by weight. The reduced viscosity of a polymer solution here should preferably be 1.7 or so. A polymer solution with a high viscosity is difficult to handle and also difficult to heat uniformly during devolatilization.

In the process of this invention, the heating step connected to the outlet of the polymerization step is divided into a plurality of heating zones, a temperature gradient is set up in each heating zone so that the temperature gradually rises from the inlet toward the outlet, and the polymer solution is heated at a temperature at which substantially none of said volatile substances vaporizes near the inlet and at a temperature at which said volatile substances vaporize near the outlet.

The number and size of heating zones to be provided and the degree of heating to be applied in the heating step can be varied suitably with the kind of polymer solution, the concentration of volatile substances, and the like.

An explanation will be given on this point with reference to the introduction of a polymer solution containing styrene polymers into a heating step having two heating zones. The ratio in size of the heating zone near the inlet to that near the outlet is normally 1:1 to 1:4, preferably 1:2 to 1:4, and the degree of heating is 150 to 200 °C, preferably 150 to 170 °C, in the heating zone on the inlet side and 200 to 300 °C, preferably 200 to 250 °C, in the heating zone on the outlet side. It is better to adjust further the temperature of the heating zone on the inlet side on the basis of the composition of the polymer solution, for example, at 150 to 180 °C when a styrene polymer solution with a reduced viscosity of 1.25 to 1.70 is introduced. Heating at a too high temperature in the heating zone on the inlet side induces the unreacted monomer in the polymer solution to polymerize more easily to form low-molecular-weight polymers whereas heating at a too low temperature lessens the effect of dividing the heating step. In the heating zone on the outlet side, a higher temperature can shorten the residence time of the polymer solution in the heating step, but a too high temperature here rather favors the formation of low-molecular-weight polymers. It is advisable to keep the difference in heating temperature between the heating zone on the inlet side and that on the outlet side normally at 20 °C, preferably 40 to 100 °C.

It is preferable to keep the polymer solution substantially free from foaming during its travel through steps provided before the heating step. Where a multitube heat exchanger is used as heater, this objective can be attained effectively, for example, by making the diameter of a heat tranfer tube smaller and providing an orifice at the inlet of the tube. Any foaming of the polymer solution prior to the heating step tends to make the flow of the solution nonuniform and in its turn make the heating nonuniform, generating spots of excessive overheating and inducing the unreacted monomer there to polymerize to form low-molecular-weight polymers.

It is desirable to connect one heating zone directly with another in the heating step. Any distance placed between them will extend the residence time and lower the efficiency.

The polymer solution thus heated successively from the relatively low temperature to the specified relatively high temperature in the heating step is sent to the reduced-pressure vapor-liquid separation step provided next to the outlet of the heating step and flashed for separation into a vapor and a liquid. In this vapor-liquid separation step, the polymer solution heated to the specified temperature in the heating step is placed under a reduced pressure of specified magnitude to remove volatile substances such as the unreacted monomer and solvent as vapor and withdraw the devolatilized polymers as liquid. The degree of pressure reduction in the vapor-liquid separation step varies with the kind of polymers to be produced, the temperature in the heating step, the degree of removal of the volatile substances, and the like. Although a higher degree of pressure reduction can remove the volatile substances at higher efficiency, the pressure to be applied normally ranges from 1 to 600 mmHg, preferably from 1 to 50 mmHg, as an excessively large reduction in pressure necessitates larger equipment and causes operational difficulties. The pressure here may, however, be 200 to 500 mmHg where a low degree of devolatilization is acceptable, for example, for the reason that devolatilization by the process of this invention is followed up with devolatilization by the process of this invention or by another process.

The apparatus for practicing the process of this invention must meet the following requirements: the apparatus in question is equipped with a heating section for effecting the stepwise heating and an adjoining section for reduced-pressure vapor-liquid separation, the heating section is composed of a multitube heat exchanger having a channel for the polymer solution and a channel for a heat transfer fluid, and the channel for the heat transfer fluid is divided into a plurality of heating compartments with each compartment having an inlet and an outlet for the heat transfer fluid and being capable of providing the polymer solution flowing through its own channel with a temperature gradient increasing gradually from upstream toward downstream.

A satisfactory apparatus, designed for two-step heating in the heating section, will be described as an example. The apparatus is composed of a vertical multitube heat exchanger connected above to the outlet of the polymerization step and below directly to a reduced-pressure vapor-liquid separation vessel with the shell side of said vertical multitube heat exchanger divided into upper and lower heating compartments by a partition and the polymer solution flowing through the tube side is heated in two steps by circulating a low-temperature heat transfer fluid through the upper heating compartment and a high-temperature heat transfer fluid through the lower heating compartment. In this case, a static mixer may be applied as a heat transfer tube through which the polymer solution flows in the heating section; it can improve the heating efficiency, shorten the residence time of the polymer solution, and suppress more reliably the polymerization of the unreacted monomer in the polymer solution.

The number of compartments into which the heating section is devided, the number of steps in which the heating is carried out, and the temperature of the polymer solution may be chosen suitably in consideration of the stability of the polymer solution and the like. There is no restriction to the procedure for circulating a heat transfer fluid through each heating compartment; a heat transfer fluid may be separately controlled in temperature and circulated to each heating compartment or it may be circulated through the connected heating compartments from the high temperature side to the low temperature side with a temperature control made, as needed, between the heating compartments.

In the process of this invention, a uniform flow of the polymer solution is generated by introducing the polymer solution into the heating section at a temperature at which no flashing occurs, the polymer solution can be heated rapidly and uniformly without flashing by dividing the heating step into a plurality of heating zones with a temperature gradient set up gradually increasing from the inlet side to the outlet side, and the formation of low-molecular-weight polymers is suppressed as much as possible by flashing the polymer solution uniformly at one stretch in the following vapor-liquid separation step.

With the application of the process and the apparatus of this invention, the temperature in each heating zone and the degree of pressure reduction in the vapor-liquid separation step are properly controlled to attain with ease the devolatilization conditions such as state of foaming and residence time matching the average molecular weight of the product polymers and the concentration of polymers in the polymer solution and to prevent as much as possible the product polymers from becoming contaminated with low-molecular-weight polymers and the temperature and other conditions are made easier to set to obtain a viscosity for easy handling.

Brief Description of the Drawing

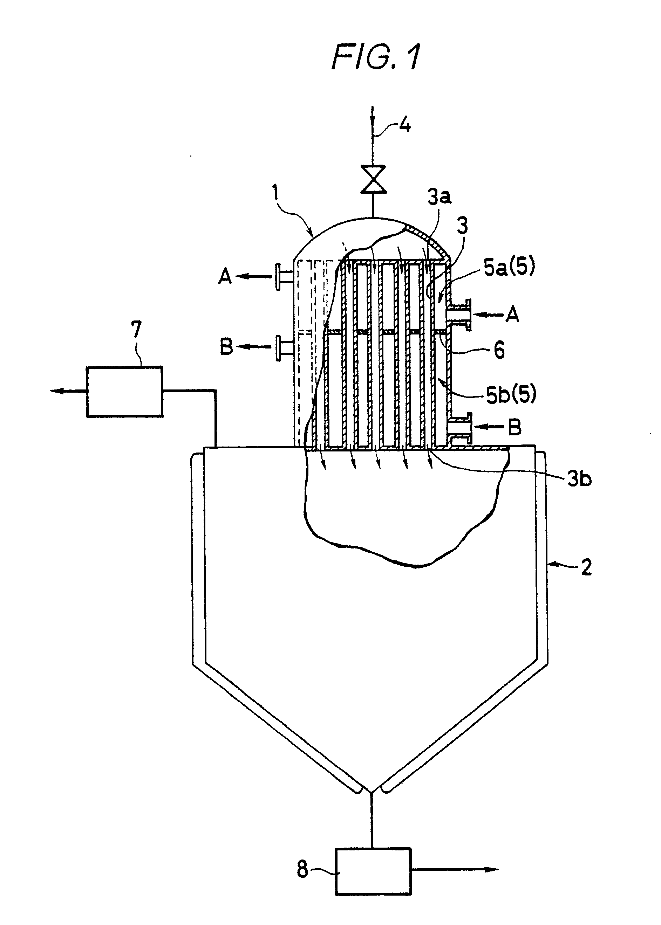

Figure 1 shows an example of the apparatus of this invention with a partial cross section.

The legend is as follows:

1; Vertical multitube heat exchanger
2; Vapor-liquid separation vessel
3; Heat exchange tube
3a; Inlet of heat exchange tube
3b; Outlet of heat exchange tube
4; Outlet line from the polymerization step
5; Heating section
5a; Upper heating compartment
5b; Lower heating compartment
6; Partition
A; Low-temperature heat transfer fluid
B; High-temperature heat transfer fluid

Preferred Embodiments of the Invention

An apparatus useful for practicing the process of this invention for removing volatile substances will be explained in detail with reference to the attached drawing.

Figure 1 is a drawing with a partial cross section to illustrate an apparatus of this invention for removing volatile substances. The apparatus is composed of the vertical multitube heat exchanger 1 which corresponds to the heating step for the polymer solution and the vapor-liquid separation vessel 2 installed beneath the vertical multitube heat exchanger 1 and directly connected thereto. The aforesaid vertical multitube heat exchanger 1 is connected to the outlet line 4 of the polymerization step on the inlet side 3a of the heat exchange tube 3, the space outside the heat exchange tube 3 constitutes the heating section 5 through which a heat transfer fluid circulates, and the heating section 5 is divided into the upper and lower heating compartments 5a and 5b by the partition 6. The aforesaid vapor-liquid separation vessel 2 is connected at the top to the volatile substance recovery device 7 which is connected to a vacuum pump (not shown in the figure) and at the bottom to the polymer conveying device 8 for withdrawing the devolatilized polymers.

The heat transfer fluid A of a relatively low temperature is circulated through the upper heating compartment 5a of the heat exchanger 1 while the heat transfer fluid B of a relatively high temperature is circulated through the lower heating compartment 5b. The polymer solution is introduced from the outlet line 4 of the polymerization step into the heat exchanger 1 and, while flowing through the heat exchange tube 3, is heated first to a specified temperature by the low-temperature transfer fluid circulating through the upper heating compartment 5a on the inlet side 3a and then to the target temperature by the high-temperature heat transfer fluid circulating through the lower heating compartment 5b on the outlet side 3b.

The polymer solution thus heated stepwise to the specified temperature by the heat transfer fluids circulating through the upper and lower heating compartments during its travel through each heat exchange tube 3 of the heat exchanger 1 is forced to flow in jets from the outlet 3b of the heat exchange tube 3 into the vapor-liquid separation vessel 2 which is kept at a specified level of reduced pressure and the volatile substances such as the unreacted monomer and solvent in the polymer solution vaporize in an instant, or undergo the so-called flashing, to be separated into a vapor and a liquid.

The volatile substances thus separated are recovered in the volatile substance recovery device 7 which is connected to the upper part of the vapor-liquid separation vessel 2 while the devolatilized polymers are withdrawn as product from the polymer conveying device 8 which is connected to the bottom of the vapor-liquid separation vessel 2.

The devolatilization by the process of this invention may be carried out with the use of a single unit, or two units connected in series, of the apparatus of this invention or, further still, in connection with a devolatilizer or pelletizer of another kind, for example, in connection with an extruder capable of devolatilizing and pelletizing.

This invention will be explained in detail with reference to the accompanying examples and comparative examples.

## Examples 1 - 3

A polymer solution obtained by bulk polymerization of styrene to a conversion of 48% by weight was continuously fed to the apparatus shown in Fig. 1 to devolatilize volatile substances mainly consisting of the unreacted monomer. Heat transfer fluid A of 170°C and heat transfer fluid B of 220 to 260°C were circulated respectively through the upper and lower heating compartments 5a and 5b of the multitube heat exchanger 1 and the pressure inside the vapor-liquid separation vessel 2 was maintained at 400 mmHg.

The temperature of the polymer solution was 115°C at the outlet of the polymerization section, 160°C after heating in the upper heating compartment 5a, and 210°C when flashed into the vapor-liquid separation vessel 2.

Table 1 shows the styrene monomer content in the polymer solution, the degree of lowering of the reduced viscosity of the styrene polymers as a measure of the extent of the formation of low-molecular-weight polymers, and the content of oligomers (methanol-solubles excepting the monomer) in the devolatilized styrene polymers.

Table 1

| | Monomer content (wt%) | Temperature of heat transfer fluid (°C) | | Reduced viscosity of polymer | | | Oligomer content in polymer (wt%) |
|---|---|---|---|---|---|---|---|
| | | Upper heating compartment (A) | Lower heating compartment (B) | Inlet of apparatus | Outlet of apparatus | Degree of lowering (%) | |
| Example 1 | 52 | 170 | 220 | 1. 65 | 1. 47 | 11 | 1. 5 |
| " 2 | " | " | 240 | " | 1. 45 | 12 | 1. 8 |
| " 3 | " | " | 260 | " | 1. 50 | 9 | 2. 0 |
| " 4 | 41 | " | 220 | 1. 40 | 1. 34 | 4 | 1. 3 |
| " 5 | " | " | 240 | " | 1. 30 | 7 | 1. 6 |
| " 6 | " | " | 260 | " | 1. 39 | 1 | 1. 9 |
| Comparative Example 1 | 51 | 270 | | 1. 57 | 1. 35 | 14 | 2. 6 |
| " 2 | 50 | 250 | | " | 1. 32 | 16 | 2. 5 |
| " 3 | 46 | 220 | | 1. 50 | 1. 29 | 14 | 2. 6 |
| " 4 | " | 200 | | " | 1. 24 | 17 | 1. 3 |

Examples 4 - 6

Experiments were carried out as in Examples 1-3 with the exception of carrying out the bulk polymerization to a conversion of 59%. The results are shown in Table 1.

Comparative Examples 1 - 4

Experiments were carried out as in Examples 1-6 with the exceptions of carrying out the bulk polymerization to conversions of 46 to 51%, using heat transfer fluid B of 200 to 270 °C, and heating the polymer solution at a single temperature level.

As is apparent from Table 1, the styrene polymers obtained in the examples show a smaller change in the reduced viscosity before and after the devolatilization, less contamination with low-molecular-weight polymers, and a lower content of oligomers than those obtained in the comparative examples.

Industrial Applicability

According to this invention, division of the heating step for the polymer solution into a plurality of compartments enables easy control of the heating conditions, the residence time of the polymer solution in the heating section, and the timing of flashing and this helps to suppress the polymerization of the unreacted monomer in the polymer solution to form low-molecular-weight polymers. In such divided heating step, the polymer solution in the heating compartment at the inlet side does not virtually foam, is uniform and easy to flow, and can be heated at a temperature at which flashing does not occur. Hence it becomes possible to heat the polymer solution uniformly and efficiently without excessive local overheating and suppress the formation of low-molecular-weight polymers as much as possible.

**Claims**

1. A process for removing volatile substances from a thermoplastic polymer solution containing volatile substances resulting from bulk or solution polymerization by devolatilization consisting of a heating step and the following reduced-pressure vapor-liquid separation step which is characterized by dividing said heating step into a plurality of heating zones extending from the inlet of said polymer solution to the outlet thereof, providing said polymer solution with a temperature gradient increasing gradually from the heating zone on the inlet side to the heating zone on the outlet side, heating said polymer solution in the heating zone on the inlet side at a temperature at which substantially none of said volatile substances vaporizes, heating said polymer solution in one of the second heating zone and those thereafter at a temperature at which said volatile substances vaporize, and flashing said polymer solution to effect vapor-liquid separation in the following vapor-liquid separation step.

2. A process for removing volatile substances according to claim 1 wherein said thermoplastic polymers are styrene polymers and said heating step is divided into two heating zones with the first heating zone heated at 150 to 200 °C and the second heating zone at 200 to 300 °C.

3. An apparatus for removing volatile substances from a polymer solution equipped with a heating section for heating a polymer solution containing volatile substances resulting from bulk or solution polymerization and the following reduced-pressure vapor-liquid separation section for flashing said polymer solution to effect vapor-liquid separation which is characterized by constructing said heating section with a multitube heat exchanger equipped with a channel for said polymer solution and a channel for a heat transfer fluid, dividing said channel for said heat transfer fluid into a plurality of heating compartments with each compartment having an inlet and an outlet for said heat transfer fluid, and providing said polymer solution flowing through said channel for said polymer solution with a temperature gradient gradually increasing from upstream toward downstream.

4. An apparatus for removing volatile substances according to claim 3 wherein a vertical multitube heat exchanger is connected above to the outlet of the polymerization step and below directly to the reduced-pressure vapor-liquid separation vessel, the shell side of said vertical multitube heat exchanger is divided into upper and lower heating compartments by a partition, and heating said polymer solution in two steps by circulating a low-temperature heat transfer fluid through the upper heating compartment and a high-temperature heat transfer fluid through the lower heating compartment.

## FIG. 1

# INTERNATIONAL SEARCH REPORT

International Application No PCT/JP90/00284

| I. CLASSIFICATION OF SUBJECT MATTER (if several classification symbols apply, indicate all) |
|---|
| According to International Patent Classification (IPC) or to both National Classification and IPC |

Int. Cl⁵    C08F6/02, C08F6/10

| II. FIELDS SEARCHED |
|---|

**Minimum Documentation Searched**

| Classification System | Classification Symbols |
|---|---|
| IPC | C08F6/00 - 6/28, 12/00 - 12/12 |

Documentation Searched other than Minimum Documentation
to the Extent that such Documents are Included in the Fields Searched

| | |
|---|---|
| Jitsuyo Shinan Koho | 1926 - 1989 |
| Kokai Jitsuyo Shinan Koho | 1971 - 1989 |

## III. DOCUMENTS CONSIDERED TO BE RELEVANT

| Category * | Citation of Document, with indication, where appropriate, of the relevant passages | Relevant to Claim No. |
|---|---|---|
| X | JP, A, 59-18707 (Mitsui Toatsu Chemicals, Inc.), 31 January 1984 (31. 01. 84), Lines 5 to 16, column 1 (Family: none) | 1 - 4 |
| X | JP, A, 59-166506 (Mitsui Toatsu Chemicals, Inc.), 19 September 1984 (19. 09. 84), Lines 5 to 19, column 1 & DE, 3409066 & US, 4537954 | 1 - 4 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure. use. exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

| IV. CERTIFICATION |
|---|

| Date of the Actual Completion of the International Search | Date of Mailing of this International Search Report |
|---|---|
| April 27, 1990 (27. 04. 90) | May 14, 1990 (14. 05. 90) |

| International Searching Authority | Signature of Authorized Officer |
|---|---|
| Japanese Patent Office | |

Form PCT ISA 210 (second sheet) (January 1985)